# EUROPÄISCHE PATENTSCHRIFT

(11) **EP 3 669 291 B1**
(45) Veröffentlichungstag und Bekanntmachung des Hinweises auf die Patenterteilung: **11.06.2025**
(21) Anmeldenummer: 18752113.3
(22) Anmeldetag: 31.07.2018
(51) Int. Cl.: G06F 21/10

(54) **VERFAHREN ZUM BETREIBEN EINES ELEKTRISCHEN STEUERGERÄTS UND ELEKTRISCHES STEUERGERÄT**
METHOD FOR OPERATING AN ELECTRICAL CONTROL DEVICE AND ELECTRICAL CONTROL DEVICE
PROCÉDÉ DE FONCTIONNEMENT D'UN APPAREIL DE COMMANDE ÉLECTRIQUE ET APPAREIL DE COMMANDE ÉLECTRIQUE

(30) Priorität: 18.08.2017 DE 102017214443
(43) Veröffentlichungstag der Anmeldung: 24.06.2020
(73) Patentinhaber: Lenze Automation GmbH, 31855 Aerzen (DE)
(72) Erfinder: ZANG, Eduard, 31157 Sarstedt (DE); STORK, Detlef, 32423 Minden (DE); HESSE, Peter, 31789 Hameln (DE)
(74) Vertreter: Patentanwälte Ruff, Wilhelm, Beier, Dauster & Partner mbB
(86) Internationale Anmeldenummer: PCT/EP2018/070764
(87) Internationale Veröffentlichungsnummer: WO 2019/034414

(56) Entgegenhaltungen:
- EP-A1- 2 854 062
- US-A1- 2006 018 454
- US-A1- 2006 047 604

## Beschreibung

Die Erfindung betrifft ein Verfahren zum Betreiben eines elektrischen Steuergeräts und ein elektrisches Steuergerät.

Elektrische Steuergeräte verwenden häufig Wechselspeichermedien, auf denen Lizenzinformationen oder ein so genannter "Application Credit" in Form einer oder mehrerer Dateien gespeichert sein können. Die Lizenzinformationen werden beispielsweise dazu genutzt, ein Lizenzierungsmodell für einen Benutzer des Steuergeräts zu realisieren. Ein solches Lizenzierungsmodell kann beispielsweise auf einem so genannten Credit-Konzept beruhen, bei dem bestimmte Funktionen des Steuergeräts in Abhängigkeit von den Lizenzinformationen für den Benutzer uneingeschränkt zur Verfügung stehen oder nicht bzw. nur eingeschränkt zur Verfügung stehen.

Wenn die Lizenzinformationen versehentlich gelöscht werden und/oder das Wechselspeichermedium versehentlich formatiert wird, kann der "Application Credit" schlimmstenfalls verloren gehen.

Die US 2006/0047604 A1 zeigt ein Verfahren und eine Vorrichtung zum Ausführen eines Applikationsprogramms, das auf einem Wechselspeichermedium gespeichert ist. Zur Authentifizierung des Applikationsprogramms wird eine auf dem Wechselspeichermedium gespeicherte Lizenzdatei gelesen, aus der Lizenzdatei eine Lizenzdatei-Identifikation extrahiert und die Lizenzdatei-Identifikation mit einer zuvor gelesenen Wechselspeichermedium-Identifikation verglichen.

Die EP 2 854 062 A1 zeigt als technologischen Hintergrund der Erfindung Verfahren und Vorrichtungen zum Sicherheitsmanagement.

Die US 2006/0018454 A1 zeigt ein System, bei dem mittels einer auf einem Wechselspeichermedium gespeicherten Lizenzinformation ein Funktionsumfang eines Steuergeräts bestimmt werden kann.

Die US 2015/0081047 A1 zeigt ein System, bei dem eine Lizenzinformation mittels einer Wechselspeichermedium-Identifikation validiert werden kann.

Der Erfindung liegt die Aufgabe zugrunde, ein Verfahren zum Betreiben eines elektrischen Steuergeräts und ein elektrisches Steuergerät zur Verfügung zu stellen, die eine sichere Verwaltung von Lizenzinformationen ermöglichen.

Die Erfindung löst diese Aufgabe durch ein Verfahren zum Betreiben eines elektrischen Steuergeräts nach Anspruch 1 und ein elektrisches Steuergerät nach Anspruch 5.

Das Verfahren dient zum Betreiben eines elektrischen Steuergeräts basierend auf Lizenzinformationen, die auf einem Wechselspeichermedium gespeichert sind, beispielsweise in Form einer oder mehrerer Dateien. Die Dateien können die Lizenzinformationen beispielsweise in strukturierter Form enthalten.

Zunächst liest das Steuergerät eine Wechselspeichermedium-Identifikation des Wechselspeichermediums aus. Bei der Wechselspeichermedium-Identifikation kann es sich um eine Identifikation handeln, die das Wechselspeichermedium eindeutig identifiziert. Die Wechselspeichermedium-Identifikation kann derart gestaltet sein, dass sie von einem Benutzer des Steuergeräts nicht veränderbar ist.

Das Steuergerät liest weiter eine Lizenzdatei aus, die auf dem Wechselspeichermedium gespeichert ist, selbstverständlich vorausgesetzt, dass die Lizenzdatei auf dem Wechselspeichermedium vorhanden ist. Falls keine Lizenzdatei auf dem Wechselspeichermedium vorhanden ist oder falls auf das Wechselspeichermedium nicht zugegriffen werden kann, wird wie weiter unten beschrieben verfahren.

Das Lesen der Wechselspeichermedium-Identifikation und der Lizenzdatei kann in beliebiger Reihenfolge durchgeführt werden.

Anschließend extrahiert das Steuergerät eine Lizenzdatei-Identifikation, die in der Lizenzdatei gespeichert ist, aus der gelesenen Lizenzdatei.

Dann vergleicht das Steuergerät die extrahierte Lizenzdatei-Identifikation mit der Wechselspeichermedium-Identifikation. Falls die Lizenzdatei-Identifikation mit der Wechselspeichermedium-Identifikation übereinstimmt, wird auf eine valide Lizenzdatei bzw. ein valides Wechselspeichermedium geschlossen, so dass in der Lizenzdatei gespeicherte Lizenzinformationen aus der Lizenzdatei ausgelesen werden und zur Steuerung des Funktionsumfangs des Steuergeräts verwendet werden. Anschließend speichert das Steuergerät in einen nicht-flüchtigen, insbesondere steuergeräteinternen, Speicher die Lizenzdatei-Identifikation und die Lizenzinformationen für eine gegebenenfalls notwendige Rekonstruktion bei Verlust der Lizenzdatei.

Für den Fall, dass keine Lizenzdatei auf dem Wechselspeichermedium gespeichert ist und/oder dass das Wechselspeichermedium neu formatiert wurde bzw. unformatiert ist, vergleicht das Steuergerät die Wechselspeichermedium-Identifikation mit der im Steuergerät gespeicherten Lizenzdatei-Identifikation, um zu bestimmen, ob es sich um ein valides Wechselspeichermedium handelt. Typischerweise wird zumindest bei einer Erstinbetriebnahme des Steuergeräts eine Wechselspeichermedium-Identifikation im Steuergerät abgespeichert, so dass eine solche in Folge als vorhanden vorausgesetzt werden kann.

Falls es sich um ein valides Wechselspeichermedium handelt, d.h. wenn die im Steuergerät gespeicherte Lizenzdatei-Identifikation mit der Wechselspeichermedium-Identifikation übereinstimmt, erzeugt das Steuergerät eine Lizenzdatei auf dem Wechselspeichermedium, wobei die erzeugte Lizenzdatei die im Steuergerät gespeicherte Lizenzdatei-Identifikation und die im Steuergerät gespeicherten Lizenzinformationen enthält. Dies ermöglicht es, dass ein Benutzer trotz versehentlichem Löschen oder Formatieren des Wechselspeichermediums seinen Application Credit behält.

Gemäß einer Ausführungsform sind die Lizenzdatei-Identifikation und die Lizenzinformationen verschlüsselt in der Lizenzdatei gespeichert, so dass eine unbefugte Manipulation der Lizenzdatei-Identifikation und/oder der Lizenzinformationen verhindert werden kann.

Gemäß einer Ausführungsform weist das Steuergerät einen Satz an möglichen Funktionen auf, wobei die Lizenzinformationen steuern, welche der Funktionen des Satzes an möglichen Funktionen, beispielsweise unverzögert, ausführbar sind.

Gemäß einer Ausführungsform ist die Wechselspeichermedium-Identifikation eine Wechselspeichermedium-Seriennummer, beispielsweise eine Seriennummer einer SD-Karte, die in einem so genannten Card Identification (CID) Register der SD-Karte als so genannte Card Serial Number (PSN) gespeichert ist.

Die Erfindung betrifft weiter ein elektrisches Steuergerät aufweisend einen internen, nicht-flüchtigen Speicher, beispielsweise einen Flash-Speicher.

Das Steuergerät weist weiter eine Lese-/Schreibeinheit zum Lesen und Beschreiben eines Wechselspeichermediums auf, beispielsweise eine SD-Karten-Schreibe-/Leseeinheit.

Das Steuergerät weist weiter eine Steuereinheit auf, beispielsweise in Form eines Mikroprozessors und zugehörigem Programmspeicher, die dazu ausgebildet ist, ein oben beschriebenes Verfahren auszuführen.

In einer Ausführungsform weist das Steuergerät ein Wechselspeichermedium auf, das zum Speichern von Lizenzinformationen ausgebildet ist.

Das Steuergerät kann beispielsweise ein Frequenzumrichter, ein Servoumrichter oder ein so genannter Motion Controller sein. Motion Controller sind elektrische Steuergeräte zur Bewegungsregelung oder Bewegungssteuerung, mittels denen eine Pose, eine Geschwindigkeit, eine Beschleunigung oder einer Kombination daraus beeinflusst werden kann. Typische Anwendung ist beispielsweise die Punkt-zu-Punkt-Positionsregelung und die Drehzahlregelung.

Das Wechselspeichermedium kann beispielsweise eine SD-Karte sein.

Die Lizenzdatei kann als eine einzelne Datei gebildet sein oder aus einem Dateiverbund aus mehreren verschiedenen (Unter-) Dateien bestehen. Falls die Lizenzdatei aus einem Dateiverbund besteht, kann beispielsweise die Lizenzdatei-Identifikation in einer der Dateien gespeichert sein und die Lizenzinformationen können in einer anderen der Dateien gespeichert sein.

Die Erfindung wird nachfolgend unter Bezugnahme auf die Zeichnungen detailliert beschrieben. Hierbei zeigen:
- Fig. 1: ein elektrisches Steuergerät und
- Fig. 2: ein schematisches Flussdiagramm eines Verfahrens zum Betreiben des Steuergeräts von Fig. 1 basierend auf Lizenzinformationen, die auf einem Wechselspeichermedium gespeichert sind.

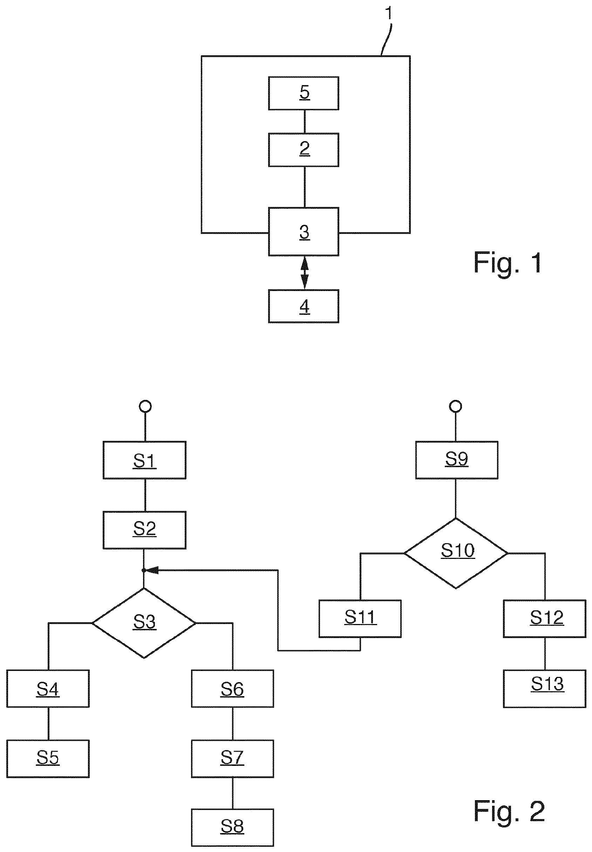

Fig. 1 zeigt ein elektrisches Steuergerät 1 in Form eines Frequenzumrichters mit einem internen, nicht-flüchtigen Flash-Speicher 2, einer SD-Karten Lese-/Schreibeinheit 3 zum Lesen und Beschreiben eines Wechselspeichermediums 4 in Form einer SD-Karte und einer mikroprozessorbasierten Steuereinheit 5, die den Betrieb des elektrischen Steuergeräts1 steuert, wie nachfolgend detailliert unter Bezugnahme auf Fig. 2 beschrieben wird.

Das elektrische Steuergerät 1 wird basierend auf Lizenzinformationen betrieben, die auf dem Wechselspeichermedium 4 gespeichert sind. Hierzu führt das Steuergerät 1 bzw. dessen Steuereinheit 5 folgende Schritte aus.

Das Steuergerät 1 liest eine Wechselspeichermedium-Identifikation in Form einer Seriennummer des Wechselspeichermediums 4 aus und liest, sofern vorhanden, den Inhalt einer Lizenzdatei ein, die auf dem Wechselspeichermedium 4 gespeichert ist.

Anschließend extrahiert das Steuergerät 1 eine Lizenzdatei-Identifikation aus der gelesenen Lizenzdatei und vergleicht die Lizenzdatei-Identifikation mit der Wechselspeichermedium-Identifikation. Wenn die Lizenzdatei-Identifikation mit der Wechselspeichermedium-Identifikation übereinstimmt, werden Lizenzinformationen aus der Lizenzdatei extrahiert und das Steuergerät stellt einen Funktionsumfang bereit, der von den Lizenzinformationen abhängig ist.

Schließlich werden die Lizenzdatei-Identifikation und die Lizenzinformationen in dem nicht-flüchtigen Speicher 2 des elektrischen Steuergeräts 1 für eine gegebenenfalls notwendige Rekonstruktion der Lizenzdatei gespeichert.

Für den Fall, dass keine Lizenzdatei auf dem Wechselspeichermedium 4 gespeichert ist oder das Wechselspeichermedium 4 unformatiert oder neu formatiert ist, vergleicht die Steuereinheit 1 die Wechselspeichermedium-Identifikation mit der im Steuergerät 1 gespeicherten Lizenzdatei-Identifikation.

Wenn die im Steuergerät 1 gespeicherte Lizenzdatei-Identifikation mit der Wechselspeichermedium-Identifikation übereinstimmt, erzeugt das Steuergerät 1 eine Lizenzdatei auf dem Wechselspeichermedium 4, wobei die erzeugte Lizenzdatei die im Steuergerät gespeicherte Lizenzdatei-Identifikation und die im Steuergerät 1 gespeicherten Lizenzinformationen enthält.

Wenn die im Steuergerät 1 gespeicherte Lizenzdatei-Identifikation nicht mit der Wechselspeichermedium-Identifikation übereinstimmt, erzeugt das elektrische Steuergerät 1 ebenfalls eine Lizenzdatei auf dem Wechselspeichermedium 4, wobei die erzeugte Lizenzdatei Lizenzinformationen dergestalt enthält, dass lediglich ein Testbetrieb möglich ist.

Das erfindungsgemäße Verfahren wird nachfolgend unter Bezugnahme auf Fig. 2 veranschaulicht. Fig. 2 zeigt ein schematisches Flussdiagramm des Verfahrens zum Betreiben des Steuergeräts 1 von Fig. 1.

In Fig. 2 links ist der Fall dargestellt, dass auf dem Wechselspeichermedium 4 eine Lizenzdatei vorhanden ist. Rechts ist der Fall dargestellt, dass auf dem Wechselspeichermedium 4 keine Lizenzdatei vorhanden ist.

In einem Schritt S1 wird nach dem Starten des Steuergeräts 1 die Lizenzdatei geöffnet und gelesen. Aus der verschlüsselten Datei werden die Informationen "available application credit" und "Volume-ID" des Wechselspeichermediums in Form der SD-Karte 4 extrahiert.

In einem Schritt S2 wird die ausgelesene "Volume-ID" mit der real vorhandenen Volume-ID (Seriennummer) der SD-Karte 4 verglichen. Wenn diese Informationen übereinstimmen, werden der "available application credit" und die "Volume-ID" in dem nicht-flüchtigen Speicher 2 für eine gegebenenfalls notwendige Rekonstruktion gespeichert. Andernfalls erfolgt eine Fehlerbehandlung, bei der beispielsweise nur ein eingeschränkter Betrieb bzw. Testbetrieb des Steuergeräts 1 möglich ist.

Bei Übereinstimmung der ausgelesenen "Volume-ID" mit der real vorhandenen Volume-ID wird in einem Schritt S3 überprüft, ob der ausgelesene "available application credit" im Vergleich zu dem notwendigen "needed application credit" ausreicht oder nicht.

Falls der "available application credit" im Vergleich zu dem notwendigen "needed application credit" ausreicht, wird in einem Schritt S4 der Betrieb des elektrischen Steuergeräts 1 ohne Einschränkungen ermöglicht und in einem Schritt S5 ein Normalbetrieb mit vollem Funktionsumfang aufgenommen.

Falls der "available application credit" im Vergleich zu dem notwendigen "needed application credit" nicht ausreicht, wird in einem Schritt S6 der Betrieb des Steuergeräts 1 nur unter Einschränkungen ermöglicht, indem beispielsweise eine zuvor angelegte Verzögerungszeit um 10 % inkrementiert wird und bestimmte Funktionen des elektrischen Steuergeräts 1 erst nach Ablauf der Verzögerungszeit zur Verfügung stehen.

In einem Schritt S7 wird die Verzögerungszeit als Teil der Lizenzinformationen in der Lizenzdatei auf dem Wechselspeichermedium 4 gespeichert und ebenfalls geräteintern auf dem nicht-flüchtigen Speicher 2 gespeichert.

Dann schließt sich in einem Schritt S8 ein Testbetrieb mit eingeschränktem Funktionsumfang an.

Nun Bezug nehmend auf den rechten Pfad in Fig. 2, wird in einem Schritt S9 festgestellt, dass zwar ein Wechselspeichermedium 4 vorhanden ist, jedoch keine Lizenzdatei auf dem Wechselspeichermedium 4 gespeichert ist.

In einem Schritt S10 wird dann überprüft, ob eine in dem nicht-flüchtigen Speicher 2 gespeicherte "Volume-ID" wird mit der real vorhandenen Volume-ID der SD-Karte 4 übereinstimmt.

Wenn diese Informationen übereinstimmen, wird in einem Schritt S11 eine Lizenzdatei auf dem Wechselspeichermedium 4 erzeugt, wobei die erzeugte Lizenzdatei die im Steuergerät 1 gespeicherte Lizenzdatei-Identifikation und die im Steuergerät gespeicherten Lizenzinformationen enthält. Anschließend wird zum Schritt S3 verzweigt.

Wenn diese Informationen nicht übereinstimmen, wird in einem Schritt 12 eine Lizenzdatei auf dem Wechselspeichermedium 4 erzeugt, wobei die erzeugte Lizenzdatei Lizenzinformationen enthält, die lediglich einen Testbetrieb des Steuergeräts 1 ermöglichen.

Im Schritt S13 erfolgt dann der Testbetrieb des Steuergeräts 1.

## Patentansprüche

1. Verfahren zum Betreiben eines elektrischen Steuergeräts (1) basierend auf Lizenzinformationen, die auf einem Wechselspeichermedium (4) gespeichert sind, wobei das Verfahren die mittels des Steuergeräts (1) ausgeführten Schritte aufweist:
- Auslesen einer Wechselspeichermedium-Identifikation des Wechselspeichermediums (4),
- Lesen einer Lizenzdatei, die auf dem Wechselspeichermedium (4) gespeichert ist,
- Extrahieren einer Lizenzdatei-Identifikation aus der gelesenen Lizenzdatei,
- Vergleichen der Lizenzdatei-Identifikation mit der Wechselspeichermedium-Identifikation,
- wenn die Lizenzdatei-Identifikation mit der Wechselspeichermedium-Identifikation übereinstimmt,
- Extrahieren von Lizenzinformationen aus der Lizenzdatei und Betreiben des Steuergeräts (1) in Abhängigkeit von den Lizenzinformationen und
- Speichern der Lizenzdatei-Identifikation und der Lizenzinformationen in dem Steuergerät (1), und
- wenn keine Lizenzdatei auf dem Wechselspeichermedium (4) gespeichert ist,
- Vergleichen der Wechselspeichermedium-Identifikation mit einer im Steuergerät (1) gespeicherten Lizenzdatei-Identifikation und
- wenn die im Steuergerät (1) gespeicherte Lizenzdatei-Identifikation mit der Wechselspeichermedium-Identifikation übereinstimmt, Erzeugen einer Lizenzdatei auf dem Wechselspeichermedium (4), wobei die erzeugte Lizenzdatei die im Steuergerät (1) gespeicherte Lizenzdatei-Identifikation und die im Steuergerät (1) gespeicherten Lizenzinformationen enthält.

2. Verfahren nach Anspruch 1, **dadurch gekennzeichnet, dass**
- die Lizenzdatei-Identifikation und die Lizenzinformationen verschlüsselt in der Lizenzdatei gespeichert sind.

3. Verfahren nach einem der vorhergehenden Ansprüche, **dadurch gekennzeichnet, dass**
- das Steuergerät (1) einen Satz an möglichen Funktionen aufweist, wobei die Lizenzinformationen steuern, welche der Funktionen ausführbar sind.

4. Verfahren nach einem der vorhergehenden Ansprüche, **dadurch gekennzeichnet, dass**
- die Wechselspeichermedium-Identifikation eine Wechselspeichermedium-Seriennummer ist.

5. Elektrisches Steuergerät (1), aufweisend:
- einen internen, nicht-flüchtigen Speicher (2),
- eine Lese-/Schreibeinheit (3) zum Lesen und Beschreiben eines Wechselspeichermediums (4) und
- eine Steuereinheit (5), die dazu ausgebildet ist, ein Verfahren nach einem der vorhergehenden Ansprüche auszuführen.

6. Elektrisches Steuergerät (1) nach Anspruch 5, **dadurch gekennzeichnet, dass**
- das Steuergerät (1) das Wechselspeichermedium (4) aufweist, wobei das Wechselspeichermedium (4) zum Speichern von Lizenzinformationen ausgebildet ist.

7. Elektrisches Steuergerät (1) nach Anspruch 5 oder 6, **dadurch gekennzeichnet, dass**
- das Steuergerät (1) ein Frequenzumrichter, ein Servoumrichter oder ein Motion Controller ist.

8. Elektrisches Steuergerät (1) nach einem der Ansprüche 5 bis 7, **dadurch gekennzeichnet, dass**
- das Wechselspeichermedium (4) eine SD-Karte ist.

## Claims

1. Method for operating an electrical control device (1) on the basis of licence information stored on an exchangeable storage medium (4), wherein the method comprises the following steps carried out by means of the control device (1):
- reading out an exchangeable storage medium identification of the exchangeable storage medium (4),
- reading a licence file stored on the exchangeable storage medium (4),
- extracting a licence file identification from the licence file read,
- comparing the licence file identification with the exchangeable storage medium identification,
- if the licence file identification corresponds to the exchangeable storage medium identification,
- extracting licence information from the licence file and operating the control device (1) in a manner dependent on the licence information, and
- storing the licence file identification and the licence information in the control device (1), and
- if no licence file is stored on the exchangeable storage medium (4),
- comparing the exchangeable storage medium identification with a licence file identification stored in the control device (1), and
- if the licence file identification stored in the control device (1) corresponds to the exchangeable storage medium identification, generating a licence file on the exchangeable storage medium (4), wherein the generated licence file contains the licence file identification stored in the control device (1) and the licence information stored in the control device (1).

2. Method according to Claim 1, **characterized in that**
- the licence file identification and the licence information are stored in an encrypted manner in the licence file.

3. Method according to either of the preceding claims, **characterized in that**
- the control device (1) has a set of possible functions, wherein the licence information controls which of the functions are able to be carried out.

4. Method according to any of the preceding claims, **characterized in that**
- the exchangeable storage medium identification is an exchangeable storage medium serial number.

5. Electrical control device (1), comprising:
- an internal, non-volatile memory (2),
- a read/write unit (3) for reading from and writing to an exchangeable storage medium (4), and
- a control unit (5) configured to carry out a method according to any of the preceding claims.

6. Electrical control device (1) according to Claim 5, **characterized in that**
- the control device (1) comprises the exchangeable storage medium (4), wherein the exchangeable storage medium (4) is configured for storing licence information.

7. Electrical control device (1) according to Claim 5 or 6, **characterized in that**
- the control device (1) is a frequency converter, a servoconverter or a motion controller.

8. Electrical control device (1) according to any of Claims 5 to 7, **characterized in that**
- the exchangeable storage medium (4) is an SD card.

## Revendications

1. Procédé pour faire fonctionner un appareil de commande électrique (1) sur la base d'informations de licence enregistrées sur un support de mémoire amovible (4), le procédé comprenant les étapes suivantes, mises en œuvre par l'appareil de commande (1) :
- lecture d'une identification de support de mémoire amovible du support de mémoire amovible (4),
- lecture d'un fichier de licence enregistré sur le support de mémoire amovible (4),
- extraction d'une identification de fichier de licence à partir du fichier de licence lu,
- comparaison de l'identification de fichier de licence avec l'identification du support de mémoire amovible,
- si l'identification de fichier de licence correspond à l'identification du support de mémoire amovible,
- extraction des informations de licence à partir du fichier de licence et mise en service du dispositif de commande (1) en fonction des informations de licence, et
- enregistrement de l'identification du fichier de licence et des informations de licence dans le dispositif de commande (1), et
- si aucun fichier de licence n'est enregistré sur le support de stockage amovible (4),
- comparaison de l'identification du support de stockage amovible avec une identification de fichier de licence enregistrée dans l'appareil de commande (1), et
- si l'identification du fichier de licence enregistrée dans l'appareil de commande (1) correspond à l'identification du support de mémoire amovible, création d'un fichier de licence sur le support de mémoire amovible (4), le fichier de licence créé contenant l'identification du fichier de licence enregistrée dans l'appareil de commande (1) et les informations de licence enregistrées dans l'appareil de commande (1).

2. Procédé selon la revendication 1, **caractérisé en ce que**
- l'identification du fichier de licence et les informations de licence sont mémorisées sous forme cryptée dans le fichier de licence.

3. Procédé selon l'une des revendications précédentes, **caractérisé en ce que**
- l'appareil de commande (1) comprend un ensemble de fonctions possibles, les informations de licence commandant lesquelles des fonctions sont exécutables.

4. Procédé selon l'une des revendications précédentes, **caractérisé en ce que**
- l'identification du support de mémoire amovible est un numéro de série du support de mémoire amovible.
ist.

5. Appareil de commande électrique (1), comprenant :
- une mémoire interne non volatile (2),
- une unité de lecture/écriture (3) pour lire et écrire sur un support de mémoire amovible (4), et
- une unité de commande (5) qui est conçue pour mettre en œuvre un procédé selon l'une des revendications précédentes.

6. Appareil de commande électrique (1) selon la revendication 5, **caractérisé en ce que**
- l'appareil de commande (1) comprend le support de mémoire amovible (4), le support de mémoire amovible (4) étant conçu pour stocker des informations de licence.

7. Appareil de commande électrique (1) selon la revendication 5 ou la revendication 6, **caractérisé en ce que**
- l'appareil de commande (1) est un convertisseur de fréquence, un servo-convertisseur ou un contrôleur de mouvement.

8. Appareil de commande électrique (1) selon l'une des revendications 5 à 7, **caractérisé en ce que**
- le support de mémoire volatile (4) est une carte SD.
